(19) Europäisches Patentamt
European Patent Office
Office européen des brevets

(11) EP 0 869 150 A2

(12) **EUROPÄISCHE PATENTANMELDUNG**

(43) Veröffentlichungstag:
**07.10.1998 Patentblatt 1998/41**

(51) Int. Cl.$^6$: **C08L 69/00**
// (C08L69/00, 25:12, 51:04)

(21) Anmeldenummer: **98105962.9**

(22) Anmeldetag: **01.04.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **04.04.1997 DE 19714003**

(71) Anmelder:
**BASF AKTIENGESELLSCHAFT
67056 Ludwigshafen (DE)**

(72) Erfinder:
- **Weber, Martin, Dr.
67487 Maikammer (DE)**
- **Güntherberg, Norbert, Dr.
67346 Speyer (DE)**

(74) Vertreter:
**Isenbruck, Günter, Dr. et al
Patent- und Rechtsanwälte Bardehle-Pagenberg-Dost-Altenburg-Frohwitter-Geissler & Partner
Theodor-Heuss-Anlage 12
68165 Mannheim (DE)**

(54) **Flammwidrige thermoplastische Polycarbonatformmassen mit guter Fliessfähigkeit**

(57) Die thermoplastische Formmasse, enthält, bezogen auf das Gesamtgewicht der Komponenten A bis F, das insgesamt 100 Gew.-% ergibt,

a: 1 bis 93,9 Gew.-% mindestens eines Polycarbonats als Komponente A,

b: 1 bis 93,9 Gew.-% mindestens eines teilchenförmigen Emulsionspolymerisats mit einer Glasübergangstemperatur unterhalb von 10°C als Komponente B,

c: 1 bis 93,9 Gew.-% mindestens eines Copolymerisats eines Styrols, substituierten Styrols, (Meth)acrylsäureesters oder Gemischen davon mit Acrylnitril, Methacrylnitril, Maleinsäureanhydrid, Maleinimiden oder Gemischen davon als Komponente C,

d: 3 bis 20 Gew.-% mindestens einer Phosphorverbindung mit mindestens 2 Phosphoratomen als Komponente D,

e: 0,1 bis 10 Gew.-% eines Antitropfmittels als Komponente E,

f: 1 bis 5 Gew.-% eines Mehrkomponentenesters auf der Basis von Pentaerythrit als Komponente F,

g: bis 50 Gew.-% weiterer Zusatzstoffe als Komponente G.

EP 0 869 150 A2

## Beschreibung

Die Erfindung betrifft flammwidrige thermoplastische Formmassen mit guter Fließfähigkeit, Verfahren zu ihrer Herstellung, ihre Verwendung und Formkörper daraus.

Polymerblends aus Polycarbonat und Styrolcopolymeren, wie ABS (Acrylnitril-Butadien-Styrol-Copolymerisate), ASA (Acrylnitril-Styrol-Acrylat-Copolymerisate) oder AES (Acrylnitril-Ethylen(copolymere)-Styrol-Copolymerisate) zeichnen sich durch hervorragende mechanische Eigenschaften aus. Daher finden diese Formmassen in den verschiedensten Bereichen Verwendung, beispielsweise im Fahrzeugbau, insbesondere im Automobilbau, im Bausektor, für Büromaschinen sowie für elektrische Geräte und Haushaltsgeräte.

Diese Polymerblends können durch Zusatz von Flammschutzmitteln flammwidrig ausgerüstet werden. Vorzugsweise wird dabei die Brandprüfung nach UL-94 erfüllt. Als besonders geeignete Flammschutzmittel haben sich phosphororganische Verbindungen, wie Phosphorester und Phosphinoxide erwiesen. Mit diesen Flammschutzmitteln ausgerüstete Formmassen sind aus der Literatur bekannt.

In der DE-A-40 34 336 sind chlor- und bromfreie, flammfeste thermoplastische Formmassen beschrieben, die Polycarbonate, Pfropfcopolymerisate, Styrol-Copolymerisate, Perfluor- oder Polyfluoralkansulfonsäurederivate oder -carbonsäurederivate und organische Phosphate enthalten. Als organische Phosphate kommen Monophosphate, insbesondere Triphenylphosphat und Tri(2,6-dimethylphenyl)phosphat zur Anwendung.

In der EP-A-0 640 655 sind flammwidrige spannungsrißbeständige Polycarbonat-ABS-Formmassen beschrieben, die aromatische Polycarbonate, Vinylcopolymerisate, Pfropfcopolymerisate und eine Mischung aus einer Monophosphorverbindung und einer oligomeren Phosphorverbindung enthalten. Vorzugsweise werden 10 Gew.-% eines Gemisches aus Triphenylphosphat und m-Phenylen-bis(diphenylphosphat) eingesetzt. Die Formmassen sollen durch die Kombination der Monophosphorverbindung und der oligomeren Phosphorverbindung eine verbesserte Spannungsrißbeständigkeit aufweisen.

In der EP-B-0 363 608 sind Polymermischungen beschrieben, die ein Polycarbonat, ein Pfropfcopolymer und als flammhemmendes Mittel ein oligomeres Phosphat enthalten. Als Phosphat wird ein Gemisch von oligomeren Phosphaten eingesetzt, in denen die einzelnen Phosphatgruppen über Phenylengruppen verbunden sind und an den freien Valenzen Phenylreste aufweisen. Die Anzahl der Phosphoratome beträgt durchschnittlich etwa 1,4. Die Polymermischungen sollen neben guter Flammwidrigkeit bei mittleren Phosphatmengen, wie 10 Gew.-%, eine hohe Wärmebeständigkeit aufweisen.

Die zum Erreichen der Flammwidrigkeit von PC/ABS-Blends erforderlichen Mengen an Flammschutzmitteln stellen nach wie vor ein Problem dar. Die, wie vorstehend beschrieben, vorzugsweise eingesetzten phosphororganischen Verbindungen sind meist homogen in der Polymermatrix gelöst und vermindern dadurch die Wärmeformbeständigkeit der Formmassen beträchtlich. Des weiteren wird auch die Spannungsrißbeständigkeit der Formmassen herabgesetzt. Zudem ist die Flüchtigkeit einkerniger phosphororganischer Verbindungen bei der Spritzgußverarbeitung oder Extrusion ein Problem. Die vorstehend aufgeführten Polymergemische lösen dieses Problem teilweise, jedoch zieht auch die Verwendung von Gemischen ein- und mehrkerniger phosphororganischer Verbindungen oder nur mehrkerniger phosphororganischer Verbindungen eine erhebliche Erhöhung der Schmelzeviskosität nach sich. Hierdurch wird die Verarbeitung der Formmassen, insbesondere bei der Extrusion oder Spritzgußverarbeitung sehr erschwert, so daß die Herstellung großer oder feinstrukturierter Formteile erschwert ist.

Der Erfindung liegt die Aufgabe zugrunde, flammwidrige thermoplastische Formmassen bereitzustellen, die die vorstehenden Nachteile vermeiden. Sie sollen eine hohe Wärmeformbeständigkeit, gute mechanische Eigenschaften und insbesondere gute Verarbeitbatkeit, das heißt eine niedrige Schmelzeviskosität aufweisen. Des weiteren sollen die Formmassen einen geringen Anteil an Komponenten aufweisen, die bei der Verarbeitung flüchtig sind.

Die Aufgabe wird erfindungsgemäß gelöst durch Bereitstellung einer thermoplastischen Formmasse, enthaltend, bezogen auf das Gesamtgewicht der Komponenten A bis F, das insgesamt 100 Gew.-% ergibt,

a: 1 bis 93,9 Gew.-% mindestens eines Polycarbonats als Komponente A,

b: 1 bis 93,9 Gew.-% mindestens eines teilchenförmigen Emulsionspolymerisats mit einer Glasübergangstemperatur unterhalb von 10°C als Komponente B,

c: 1 bis 93,9 Gew.-% mindestens eines Copolymerisats eines Styrols, substituierten Styrols, (Meth)acrylsäureesters oder Gemischen davon mit Acrylnitril, Methacrylnitril, Maleinsäureanhydrid, Maleinimiden oder Gemischen davon als Komponente C,

d: 3 bis 20 Gew.-% mindestens einer Phosphorverbindung mit mindestens 2 Phosphoratomen als Komponente D,

e: 0,1 bis 10 Gew.-% eines Antitropfmittels als Komponente E,

f: 1 bis 5 Gew.-% eines Mehrkomponentenesters auf der Basis von Pentaerythrit als Komponente F,

g: bis 50 Gew.-% weiterer Zusatzstoffe als Komponente G.

Es ist an sich bekannt, die Fließfähigkeiten thermoplastischer Formmassen durch Schmiermittel zu erhöhen. Eine Übersicht gebräuchlicher Schmiermittel findet sich beispielsweise in dem Handbuch "Kunststoff-Additive", R. Gächter, H. Müller (Herausgeber), 3. Auflage, Hanser Verlag, München. Auch in der Patentliteratur sind entsprechende Zusätze beschrieben.

In der EP-A1-0 593 972 sind Polycarbonat-ABS-Formmassen beschrieben, die als Schmiermittel Pentaerythritylstearat, Alkylenbisstearamide oder deren Gemische aufweisen. Es wird ausgeführt, daß die Schmiermittel nicht nur die Fließfähigkeit der Zusammensetzungen erhöhen, sondern auch die Schlagzähigkeit verbessern. Die Schmiermittel werden in Mengen von 0,3 bis 0,6 Gew.-% eingesetzt.

In der EP-A-0 437 707 wird beschrieben, daß Pentaerythritylstearat zur Delaminierung von Polycarbonat-ABS-Formmassen führt.

Erfindungsgemäß wurde gefunden, daß eine spezielle Kombination von Phosphorverbindungen mit mindestens 2 Phosphoratomen als Flammschutzmittel mit Mehrkomponentenestern auf der Basis von Pentaerythrit als Schmiermittel in thermoplastischen Formmassen, die Polycarbonate, teilchenförmige Emulsionsperimerisate und Copolymerisate aufweisen, zu flammwidrigen Formmassen führt, die eine geringe Schmelzeviskosität aufweisen, keine Delaminierung oder Verfärbung zeigen und bei der Verarbeitung kaum flüchtige Verbindungen freisetzen. Zudem weisen Sie eine hohe Wärmeformbeständigkeit auf. Die Formmassen können somit gut nach den bekannten Verfahren der Thermoplastverarbeitung zu Fasern, Folien oder Formkörpern verarbeitet werden, die flammwidrig sind und vorteilhafte Eigenschaften aufweisen. Die wesentliche Verbesserung der Fließfähigkeit durch Verwendung des erfindungsgemäß eingesetzten Schmiermittels führt nicht zu einer Beeinträchtigkeit der Flammwidrigkeit der Formmassen. Nach einer Temperaturbeanspruchung tritt keine Verfärbung der Formmassen auf, so daß deren Eigenfarbe erhalten bleibt.

Nachstehend werden zunächst die einzelnen Komponenten der erfindungsgemäßen Formmassen beschrieben.

Die Gewichtsangaben für die nachstehend aufgeführten Komponenten A bis F beziehen sich dabei auf das Gesamtgewicht der Komponenten A bis F, das insgesamt 100 Gew.-% ergibt.

Komponente A

Als Komponente A enthalten die erfindungsgemäßen Formmassen 1 bis 93,9, vorzugsweise 25 bis 87, besonders bevorzugt 50 bis 76 Gew.-% mindestens eines Polycarbonats. Das Polycarbonat ist dabei vorzugsweise ein aromatisches Polycarbonat. Das Polycarbonat ist ferner vorzugsweise halogenfrei.

Geeignete halogenfreie Polycarbonate sind beispielsweise solche auf Basis von Diphenolen der allgemeinen Formel II

$$HO\text{-}H_4C_6\text{-}A\text{-}C_6H_4\text{-}OH \qquad (II)$$

worin A eine Einfachbindung, eine $C_1$- bis $C_3$-Alkylen-, eine $C_2$- bis $C_3$-Alkyliden-, eine $C_3$- bis $C_6$-Cycloalkylidengruppe, die mit bis zu 4 Alkylresten substituiert sein kann, und insbesondere eine 2,2,4-Trimethylcyclohexylidengruppe ist, -S- oder -$SO_2$- bedeutet. Bevorzugte Diphenole der Formel II sind beispielsweise 4,4'-Dihydroxybiphenyl, 2,2-Bis-(4-hydroxyphenyl)-propan, 2,4-Bis-(4-hydroyphenyl)-2-methylbutan, 1,1-Bis-(4-hydroxyphenyl)-cyclohexan sowie Bisphenol-TMC. Besonders bevorzugt sind 2,2-Bis-(5-hydroxyphenyl)-propan und 1,1-Bis-(4-hydroxyphenyl)-cyclohexan. Sowohl Homopolycarbonate als auch Copolycarbonate sind als Komponente A geeignet, bevorzugt sind neben dem Bisphenol A-Homopolymerisat die Copolycatbonate von Bisphenol A. Weitere bevorzugte Beispiele geeigneter Diphenole sind Hydrochnion und Resorcin.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ (Gewichtsmittelwert) von 10 000 bis 200 000, vorzugsweise von 20 000 bis 80 000.

Die Diphenole der allgemeinen Formel II sind an sich bekannt oder nach bekannten Verfahren herstellbar. Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. Polydiorganosiloxanhaltige Polycarbonate sind beispielsweise in der DE-A-33 34 782 beschrieben. Geeignete Kettenabbrecher sind beispielsweise Phenol, p-tert.-Butylphenol, aber auch langkettige Alkylphenole, wie 4-(1,3-Tetramethylbutyl)-phenol gemäß DE-A-28 42 005 oder Monoalkylphenole oder Dialkylphenole mit insgesamt 8 bis 20 C-Atomen in den Alkylsubstituenten gemäß DE-A-35 06 472, wie p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt untergeordneter ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne der vorliegenden Erfindung.

Komponente B

Als Komponente B enthalten die erfindungsgemäßen Formmassen 1 bis 93,9, vorzugsweise 2 bis 50, besonders bevorzugt 4 bis 20 Gew.-% mindestens eines teilchenförmigen Emulsionspolymersisats mit einer Glasübergangstemperatur unterhalb von 10°C. Vorzugsweise ist die Komponente B halogenfrei.

Vorzugsweise ist Komponente B ein Pfropfcopolymerisat aus

b1: 20 bis 95 Gew.-% einer Pfropfgrundlage aus einem kautschukelastischen Polymer mit einer Glasübergangstemperatur unterhalb von 10°C als Komponente B1,

b2: 5 bis 80 Gew.-% einer Pfropfauflage als Komponente B2 aus

b21: 25 bis 95 Gew.-% Styrol, substituiertem Styrol, (Meth)acrylsäureestern oder Gemischen davon als Komponente B21,

b22: 5 bis 75 Gew.-% Acrylnitril, Methacrylnitril, Maleinsäureanhydrid, Maleinimid oder Gemischen davon als Komponente B22.

Vorzugsweise hat Komponente B1, die Pfropfgrundlage, eine Glasübergangstemperatur unterhalb von 0°C, besonders bevorzugt unterhalb von -20°C. Beispiele geeigneter Pfropfgrundlagen sind:

Naturkautschuk, Synthesekautschuk auf der Basis von konjugierten Dienen, gegebenenfalls mit anderen Copolymeren, sowie Elastomere auf der Basis von $C_1$- bis $C_8$-Alkylestern der Acrylsäure, die gegebenenfalls weitere Comonomere enthalten können. Bevorzugt kommen als Pfropfgrundlage B1 Polybutadien (vgl. DE-A 14 20 775 und DE-A 14 95 089) und Copolymerisate aus Polybutadien und Styrol (vgl. GB-A 6 49 166) in Betracht.

Weiterhin sind Pfropfgrundlagen B1 bevorzugt, die aufgebaut sind aus

b11: 70 bis 99,9 Gew.-% vorzugsweise 69 bis 79 Gew.-% mindestens eines Alkylacrylates mit 1 bis 8 C-Atomen im Alkylrest, vorzugsweise n-Butylacrylat und/oder 2-Ethyl-hexylacrylat, insbesondere n-Butylacrylat als alleinigem Alkylacrylat als Komponente B11,

b12: 0 bis 29,9 Gew.-%, vorzugsweise 20 bis 30 Gew.-% eines weiteren copolymerisierbaren monoethylenisch ungesättigten Monomeren, wie Butadien, Isopren, Styrol, Acrylnitril, Methylmethacrylat und/oder Vinylmethylether als Komponente B12,

b13: 0,1 bis 5 Gew.-%, vorzugsweise 1 bis 4 Gew.-% eines copolymerisierbaren, polyfunktionellen, vorzugsweise bi- oder trifunktionellen, die Vernetzung bewirkenden Monomeren als Komponente B13. Als solche bi- oder polyfunktionellen Vernetzungsmonomeren B13 eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Tricyclodecenylalkohol (DE-A 12 60 135).

Auch diese Art von Pfropfgrundlagen ist an sich bekannt und in der Literatur beschrieben, beispielsweise in der DE-A 31 49 358. Von den Pfropfauflagen B2 sind diejenigen bevorzugt, in denen B21 Styrol oder $\alpha$-Methylstyrol bedeutet. Als bevorzugte Monomeren-Gemische werden vor allem Styrol und Acrylnitril, $\alpha$-Methylstyrol und Acrylnitril, Styrol, Acrylnitril und Methylmethacrylat, Styrol und Maleinsäureanhydrid eingesetzt. Die Pfropfauflagen sind erhältlich durch Copolymerisation der Komponenten B21 und B22. Für den Fall, daß das Pfropfpolymerisat B eine Pfropfgrundlage B1 enthält, die aus Polybutadienpolymeren aufgebaut ist, spricht man von ABS-Kautschuken. Die Pfropfmischpolymerisation kann wie aus der DE-A 31 49 358 bekannt in Lösung, Suspension oder vorzugsweise in Emulsion erfolgen. Die Weichphase des Pfropfmischpolymerisats weist bei der bevorzugten Herstellung des ABS-Kautschuks und der Pfropfung in Emulsion einen mittleren Teilchendurchmesser ($d_{50}$-Wert der integralen Masseverteilung) von 0,05 bis 2 μm auf. Durch Vergrößerung der Teilchen, z.B. durch Agglomeration oder bei der Gewinnung der Emulsion im Wege des Saatlatex-Verfahrens, wird der $d_{50}$-Wert im Bereich von 0,2 bis 0,5 μm eingestellt. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenen Doppelbindungen erfolgt. Zumindest ein Teil der Monomeren ist also auf den Kautschuk gepfropft, somit durch kovalente Bindungen an den Kautschuk-Fadenmolekülen gebunden. Die Pfropfung kann auch mehrstufig erfolgen, indem zuerst ein Teil der die Pfropfauflage bildenden Monomere B2 aufgepfropft wird und anschließend der Rest. Ist die Pfropfgrundlage B1 der Pfropfpolymerisate B aus den Komponenten B11, B13 und gegebenenfalls B12 aufgebaut, so spricht man von ASA-Kautschuken. Ihre Herstellung ist an sich bekannt und beispielsweise in der DE-A 28 26 925, der DE-A 31 49 358 und der DE-A-34 14 118 beschrieben. Die Herstellung des Pfropfcopolymerisats B kann beispielsweise nach der in der DE-B-12 60 135 beschriebenen Methode erfolgen. Der Aufbau der Pfropfauflage (Pfropfhülle) des Pfropfcopolymerisats kann ein- oder zweistufig erfolgen. Im Falle des einstufigen Aufbaus der Pfropfhülle wird ein Gemisch der Monomeren B21 und B22 in dem gewünschten Gew.-Verhältnis im Bereich von 95:5 bis 50:50, vorzugsweise von 90:10 bis 65:35 in Gegenwart der Pfropfgrundlage B1 in an sich bekannter Weise (vgl. z.B. DE-A-28 26 925), vorzugsweise in Emulsion, polymerisiert.

Im Falle eines zweistufigen Aufbaus der Pfropfhülle B2 macht die 1. Stufe im allgemeinen 20 bis 70 Gew.-%, vorzugsweise 25 bis 50.-%, bezogen auf B2, aus. Zu ihrer Herstellung werden vorzugsweise nur monoethylenischungesättigte aromatische Kohlenwasserstoffe (B21) verwendet. Die 2. Stufe der Pfropfhülle macht im allgemeinen 30 bis 80 Gew.-%, insbesondere 50 bis 75 Gew.-%, jeweils bezogen auf B2, aus. Zu ihrer Herstellung werden Mischungen aus den genannten monoethylenisch ungesättigten aromatischen Kohlenwasserstoffen B21 und monoethylenisch ungesättigten Monomeren B22 im Gewichtsverhältnis B21/B22 von im allgemeinen 90:10 bis 60:40, insbesondere 80:20 bis 70:30 angewendet. Die Bedingungen der Pfropfmischpolymerisation werden vorzugsweise so gewählt, daß Teilchengrößen von 50 bis 700 nm ($d_{50}$-Wert der integralen Massenverteilung) resultieren. Maßnahmen hierzu sind bekannt und z.B. in der DE-A-28 26 925 beschrieben. Durch das Saatlatex-Verfahren kann direkt eine grobteilige Kautschukdispersion hergestellt werden. Um möglichst zähe Produkte zu erzielen, ist es häufig von Vorteil, eine Mischung mindestens zweier Pfropfcopolymerisate mit unterschiedlicher Teilchengröße zu verwenden. Um dies zu erreichen, werden die Teilchen des Kautschuks in bekannter Weise, z.B. durch Agglomeration, vergrößert, so daß der Latex bimodal (50 bis 180 nm und 200 bis 700 nm) aufgebaut ist. In einer bevorzugten Ausführungsform wird eine Mischung aus zwei Pfropfmischpolymerisaten mit Teilchendurchmessern ($d_{50}$-Wert der integralen Massenverteilung) von 50 bis 180 nm bzw. 200 bis 700 nm im Gewichtsverhältnis 70:30 bis 30:70 eingesetzt. Der chemische Aufbau der beiden Pfropfmischpolymerisate ist vorzugsweise derselbe, obwohl die Hülle des grobteiligen Pfropfmischpolymerisates insbesondere auch zweistufig aufgebaut werden kann. Mischungen aus den Komponenten A und B, wobei letztere ein grob- und feinteiliges Pfropfcopolymerisat aufweist, sind z.B. in der DE-A-36 15 607 beschrieben. Mischungen aus den Komponenten A und B, wobei letztere eine zweistufige Pfropfhülle aufweist, sind aus EP-A-0 111 260 bekannt.

Komponente C

Als Komponente C enthalten die erfindungsgemäßen Formmassen 1 bis 93,9, vorzugsweise 5 bis 50, besonders bevorzugt 10 bis 20 Gew.-% mindestens eines Copolymerisats eines Styrols, substituierten Styrols, (Meth)acrylsäureesters oder Gemischen davon mit Acrylnitril, Methacrylnitril, Maleinsäureanhydrid, Maleinimiden oder Gemischen davon. Vorzugsweise ist die Komponente C halogenfrei. Vorzugsweise ist Komponente C ein Copolymerisat aus

c1: 25 bis 95 Gew.-% eines Styrols, substituierten Styrols, (Meth)acrylsäureesters oder Gemischen davon als Komponente C1,

c2: 5 bis 75 Gew.-% Acrylnitril, Methacrylnitril, Maleinsäureanhydrid, Maleinimiden oder Gemischen davon als Komponente C2.

Dabei ist Komponente C vorzugsweise ein halogenfreies, thermoplastisches Copolymerisat.

Die Copolymerisate C sind harzartig, thermoplastisch und kautschukfrei. Besonders bevorzugte Copolymerisate C sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid. Es können auch mehrere der beschriebenen Copolymere gleichzeitig eingesetzt werden. Solche Copolymerisate entstehen häufig bei der Pfropfpolymerisation zur Herstellung der Komponente B als Nebenprodukte, besonders dann, wenn große Mengen Monomere auf kleine Mengen Kautschuk

gepfropft werden. Die Copolymerisate C sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 auf, dies entspricht mittleren Molekulargewichten $M_w$ (Gewichtsmittelwert) von 40 000 bis 2 000 000.

Ein substituiertes Styrol der Komponente B und/oder C kann als Substituenten am vinylischen Kohlenstoffatom, das den Vinylrest trägt, einen $C_{1-8}$-Alkylrest aufweisen. Der Phenylrest kann durch 1, 2 oder 3 $C_{1-8}$-Alkylreste substituiert sein.

Komponente D

Als Komponente D enthalten die erfindungsgemäßen Formmassen 3 bis 20, vorzugsweise 4 bis 17,5, besonders bevorzugt 7 bis 15 Gew.-% mindestens einer Phosphorverbindung mit mindestens 2 Phosphoratomen. Die Anzahl der Phosphoratome ist dabei der Mittelwert (Zahlenmittel), sofern ein Gemisch von Phosphorverbindungen eingesetzt wird.

Vorzugsweise weist Komponente D die allgemeine Formel (I) auf

(I)

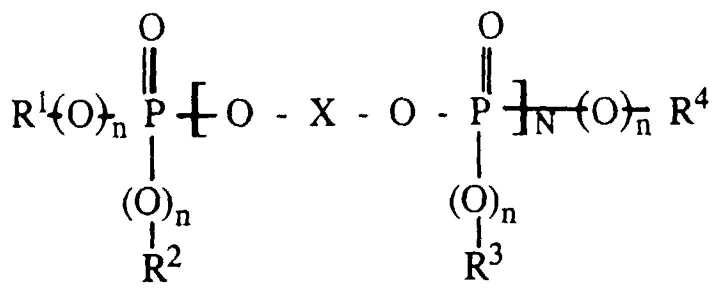

in der n unabhängig voneinander den Wert 0 oder 1 hat,

$R^1$, $R^2$, $R^3$ und $R^4$ unabhängig voneinander $C_{1-8}$-Alkyl, $C_{5-6}$-Cycloalkyl, $C_{6-10}$-Aryl oder $C_{7-12}$-Aralkyl oder, sofern n = 1, Wasserstoff bedeuten,

N einen mittleren Wert von 1 bis 5 hat und

X einen ein- oder mehrkernigen aromatischen Rest $C_{6-30}$-Rest bedeutet.

Bevorzugt sind die Reste $R^1$, $R^2$, $R^3$ und $R^4$ unabhängig $C_6$-Aryl oder $C_7$-Aralkylreste. Dabei können die aromatischen Gruppen wiederum mit Halogenatomen oder $C_{1-8}$-Alkylresten substituiert sein. Besonders bevorzugte Arylreste sind Kresyl, Phenyl, Xylenyl, Propylphenyl und Butylphenyl, wie auch die bromierten und chlorierten Derivate davon. X leitet sich vorzugsweise von Diphenolen, wie Bisphenol A, Resorcin oder Hydrochinon oder den chlorierten oder bromierten Derivaten davon ab.

n kann an den unterschiedlichen Molekülpositionen unabhängig voneinander den Wert 0 oder 1 haben, vorzugsweise hat n den Wert 1. In diesem Fall handelt es sich um Phosphatverbindungen.

N hat vorzugsweise einen durchschnittlichen Wert Von 1,1 bis 4,8, insbesondere 1,2 bis 4,3. Bei Gemischen von Verbindungen der allgemeinen Formel (I) stellt N einen durchschnittlichen Wert dar. Vorzugsweise weisen in den Gemischen alle Verbindungen sehr ähnliche Werte N auf. Es können auch einzelne Verbindungen der Formel (I) eingesetzt werden, in diesem Fall ist N kein Durchschnittswert.

Sofern n den Wert 1 hat, können die Reste $R^1$, $R^2$, $R^3$ und/oder $R^4$ unabhängig voneinander auch Wasserstoff bedeuten.

Besonders bevorzugt ist X ein m- oder p-Phenylenrest, n hat den Wert 1, $R^1$, $R^2$, $R^3$ und $R^4$ sind Phenylreste.

Als Komponente D können beispielsweise auch die in EP-B-0 363 608 und EP-A-0 640 655 beschriebenen mindestens 2 Phosphoratome aufweisenden Verbindungen eingesetzt werden.

Vorzugsweise ist Komponente D halogenfrei.

Komponente E

Als Komponente E enthalten die erfindungsgemäßen Formmassen 0,1 bis 10, vorzugsweise 0,15 bis 7,5, besonders bevorzugt 0,2 bis 5 Gew.-% eines Antitropfmittels.

Das Antitropfmittel kann dabei eine Einzelverbindung oder ein Gemisch von Verbindungen sein. Vorzugsweise wird als Antitropfmittel Teflon oder hochmolekulare Copolymerisate verwendet.

Die Copolymmerisate sind vorzugsweise halogenfrei und thermoplastisch und erfindungsgemäß aufgebaut aus

e1: 50 bis 95 Gew.-%, bevorzugt von 60 bis 80 Gew.-% vinylaromatischer Verbindungen oder deren Mischungen als Komponente E1,

e2: 5 bis 50 Gew.-%, bevorzugt von 20 bis 40 Gew.-% Acrylnitril, Methacrylnitril, Methylmethacrylat, oder deren Mischungen als Komponente E2 und

e3: 0 bis 30 Gew.-% monoethylenisch ungesättigter Monomere mit mindestens einer polaren funktionellen Gruppe als Komponente E3,

wobei die Summe der Mengen der Komponente E1, E2 und gegebenenfalls E3 100 Gew.-% ergibt.

Besonders bevorzugte Copolymerisate enthalten von 60 bis 80 Gew.-% der Monomeren E1, von 20 bis 40 Gew.-% der Monomeren E2 und von 0 bis 10 Gew.-% der Monomeren E3, wobei die Summe der Mengen der Komponenten E1, E2 und gegebenenfalls E3 100 Gew.-% ergibt. Besonders bevorzugt wird als vinylaromatisches Monomer Styrol oder $\alpha$-Methylstyrol, insbesondere Styrol, als Komponente E1 eingesetzt.

Als Monomere E3 mit polaren funktionellen Gruppen kommen beispielsweise solche mit Hydroxy-, Säure-, Anhydrid-, Imidazol-, Pyrrolidon- oder Aminogruppen in Betracht. Acrylsäure, Methacrylsäure, Vinylphenol, Maleinsäureanhydrid, Glycidylmethacrylat, Hydroxyethylacrylat, Vinylphenol, Vinylimidazol, Vinylpyrrolidon oder Dimethylaminoethylacrylat sind Beispiele geeigneter Monomere E3. Darunter werden Glycidylmethacrylat oder Hydroxyethylacrylat besonders bevorzugt. Selbstverständlich können auch Mischungen unterschiedlicher Monomere E3 eingesetzt werden.

Besonders bevorzugt sind SAN-Copolymerisate.

Erfindungsgemäß weisen die Copolymerisate mittlere Molekulargewichte $M_w$ (Gewichtsmittelwert) von mindestens 800 000 g/mol auf. Im allgemeinen liegen die mittleren Molekulargewichte im Bereich von 830 000 bis 150 000, insbesondere von 850 000 bis 1 200 000 g/mol.

Erfindungsgemäß haben die Copolymerisate eine breite Molmassenverteilung, das heißt das Verhältnis von Gewichtsmittel- zu Zahlenmittelwert der Molmassen $M_w/M_n$ ist groß. Bevorzugt beträgt das Verhältnis $M_w/M_n$ 2 oder mehr. Besonders bevorzugt ist $M_w/M_n$ 2,5 oder mehr, beispielsweise mehr als 3.

Die Copolymerisate sind an sich bekannt oder können nach an sich bekannten Methoden hergestellt werden. Im Allgemeinen lassen sie sich durch radikalische Polymerisation, bevorzugt in Lösung oder Emulsion, herstellen.

Komponente F

Als Komponente F enthalten die erfindungsgemäßen Formmassen 1 bis 5, vorzugsweise 1,5 bis 4, besonders bevorzugt 2 bis 3,5 Gew.-% eines Mehrkomponentenesters auf der Basis von Pentaerythrit. Vorzugsweise weisen die Mehrkomponentenester eine Viskosität von mehr als 70, besonders bevorzugt von mehr als 100 mPas bei 80°C auf. Besonders bevorzugt beträgt die Viskosität 70 bis 200, insbesondere 100 bis 200 mPas bei 80°C. Komponente F dient als Schmiermittel zur Verbesserung der Fließfähigkeit der erfindungsgemäßen thermoplastischen Formmassen. Es handelt sich um einen hochmolekularen Mehrkomponentenester, der durch Polykondensation aus Dicarbonsäuren, Polyolen und langkettigen Fettsäuren hergestellt wird (siehe Gächter/Müller: Kunststoff-Additive, 3. Ausgabe 1989, Hanser Verlag, München Seite 481f). Unterhalb eines Anteils von 1 Gew.-% der Komponente F nimmt die Fließfähigkeit der thermoplastischen Formmassen deutlich ab. Bei Verwendung von Mengen oberhalb von 5 Gew.-% steigt die Neigung der Formmassen zur Delaminierung. Zudem wird die Flammwidrigkeit der Formmassen verschlechtert. Somit weisen die erfindungsgemäßen Formmassen besonders gute Eigenschaften auf, wenn Komponente F in einer Menge von 1 bis 5 Gew.-% vorliegt.

Komponente G

Als Komponente G können die erfindungsgemäßen Formmassen bis zu 50 Gew.-%, vorzugsweise bis zu 40 Gew.-%, bezogen auf das Gesamtgewicht der Komponenten A bis F, an weiteren Zusatzstoffen enthalten.

Vorzugsweise enthalten die erfindungsgemäßen Formmassen bis zu 50 Gew.-%, besonders bevorzugt 0,05 bis 45 Gew.-% faser- oder teilchenförmige Füllstoffe oder deren Gemische. Dabei handelt es sich vorzugsweise um kommerziell erhältliche Produkte. Verarbeitungshilfsmittel und Stabilisatoren wie UV-Stabilisatoren, Schmiermittel, Phosphorstabilisatoren und Antistatika werden üblicherweise in Mengen von 0,01 bis 5 Gew.-% verwendet, Verstärkungsmittel

wie Kohlenstoffasern und Glasfasern hingegen von 5 bis 40 Gew.-%. Besonders bevorzugt als Komponente G sind Kohlenstoffasern und insbesondere Glasfasern. Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden. Weiterhin können Füll- oder Verstärkungsstoffe, wie Glaskugeln, Mineralfasern, Whisker, Aluminiumoxidfasern, Glimmer, Quarzmehl und Wollastonit zugesetzt werden. Außerdem seien Metallflocken (z.B. Aluminiumflocken der Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen, genannt. Insbesondere kommen Al-Flocken (K 102 der Transmet) für EMI-Zwecke (electro-magnetic interference) in Betracht; ferner Abmischen dieser Masse mit zusätzlichen Kohlenstoffasern, Leitfähigkeitsruß oder nickelbeschichteten C-Fasern. Die erfindungsgemäßen Formmassen können ferner Zusatzstoffe enthalten, die für Polycarbonate, SAN-Polymerisate und Pfropfmischpolymerisate auf Basis von ASA oder ABS oder deren Mischungen typisch und gebräuchlich sind. Als solche Zusatzstoffe seien beispielsweise genannt: Farbstoffe, Pigmente, Antistatika und Antioxidanien.

**Herstellung der Formmassen**

Die erfindungsgemäßen Formmassen werden durch Mischen der Komponenten A bis F und gegebenenfalls G hergestellt.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung und Enfernen der Lösungsmittel ist möglich. Geeignete organische Lösungsmittel für die Komponenten A bis F und die Zusätze der Gruppe G sind beispielsweise Chlorbenzol, Gemische aus Chlorbenzol und Methylenchlorid oder Gemische aus Chlorbenzol und aromatischen Kohlenwasserstoffen, z.B. Toluol. Das Eindampfen der Lösungsmittelgemische kann beispielsweise in Eindampfextrudern erfolgen. Das Mischen der z.B. trockenen Komponenten A bis F und gegebenenfalls G kann nach allen bekannten Methoden erfolgen. Vorzugsweise geschieht jedoch das Mischen der Komponenten A bis F und gegebenenfalls G bei Temperaturen von 200 bis 320°C durch gemeinsames Extrudieren, Kneten oder Verwalzen der Komponenten, wobei die Komponenten falls notwendig zuvor aus der bei der Polymerisation erhaltenen Lösung oder aus der wäßrigen Dispersion isoliert worden sind. Die erfindungsgemäßen thermoplastischen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die erfindungsgemäßen Formmassen werden zur Herstellung von Fssern, Folien oder Formkörpern verwendet. Die Erfindung betrifft auch Fasern, Folien oder Formkörper aus einer wie vorstehend beschrieben Formmasse. Diese Fasern, Folien oder Formkörper werden vorzugsweise durch Extrudieren, Extrusionsblasen oder Spritzgießen hergestellt.

Werden chlorhaltige Lösungsmittel verwendet, so werden sie vorzugsweise möglichst vollständig aus den Formmassen bzw. Fasern, Folien oder Formkörpern entfernt, so daß die erhaltenen Fasern, Folien oder Formkörper im wesentlichen, vorzugsweise vollständig halogenfrei sind.

Die Erfindung wird nachstehend anhand von Beispielen näher erläutert.

Dabei wurden die zur Charakterisierung der Formmassen verwendeten Größen wie folgt bestimmt:

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Die $d_{10}$- bzw. $d_{90}$-Werte der integralen Massenverteilung ist dabei entsprechend dem $d_{50}$-Wert definiert mit dem Unterschied, daß sie auf 10 bzw. 90 Gew.-% der Teilchen bezogen sind. Der Quotient $(d_{90}-d_{10})/d_{50} = Q$ stellt ein Maß für die Verteilungsbreite der Teilchengröße dar.

Die Erfindung wird nachstehend anhand von Beispielen näher erläutert.

**Beispiele**

Es wurden folgende Komponenten eingesetzt:

A: Ein handelsübliches Polycarbonat auf der Basis von Bisphenol A mit einer relativen Lösungsviskosität $\eta$rel von 1,3 ml/g, gemessen an einer 0,5 Gew.-%igen Lösung in Methylenchlorid bei 23°C.

$B_1$: Ein feinteiliges Pfropfmischpolymerisat, hergestellt aus

$\beta_1$) 16 g Butylacrylat und 0,4 g Tricyclodecenylacrylat, die in 150 g Wasser unter Zusatz von 1 g des Natriumsalzes einer $C_{12}$-$C_{18}$-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt und die Teilchengrößenverteilung war eng (Quotient Q = 0,29).
$\beta_2$) 150 g des nach $\beta_1$) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35%, die Teilchengröße 91 nm.

$B_2$: Ein grobteiliges Pfropfmischpolymerisat, das folgendermaßen hergestellt wurde:

$\beta_3$) zu einer Vorlage aus 1,5 g des nach $\beta_1$) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecentylacrylat und andererseits eine Lösung von 0,5 g des Natriumsalzes einer $C_{12}$-$C_{18}$-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt, die Teilchengrößenverteilung war eng (Q = 0,1).

$\beta_4$) 150 g des nach $\beta_3$) hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

$C_1$: Ein Copolymerisat aus Styrol/Acrylnitril, Gewichtsverhältnis 75:25, Viskositätszahl (0,5 % in DMF, 23°C) VZ = 82 ml/g.

$C_2$: Ein Copolymerisat aus Styrol und Acrylnitril im Gew.-Verhältnis 80:20 mit einer Viskositätszahl von 83 ml/g (gemessen an einer 0,5 Gew.-%igen Lösung in Dimethylformamid bei 23°C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.

$D_1$: Resorcinoldiphenylphosphat, z.B. Fyrolflex RDP, von Akzo.

$D_2$: Triphenylphosphat, z.B. Disflamoll, von Bayer (für Vergleichsversuche).

$E_1$: Teflon-Dispersion 30N, von DuPont.

$E_2$: Copolymerisat aus Styrol/Acrylnitril im Gew.-Verhältnis 75:25 mit einem Molekulargewicht ($M_w$) von 1200.000 g/mol (bestimmt mittels GPC gegen eine PS-Eichkurve).

$F_1$: Ein hochmolekularer Mehrkomponentenester auf Basis von Pentaerythrit mit einer Viskosität von 110 bis 150 mPas bei 80°C (Loxiol® G 70S von Henkel).

$F_2$: Polyethylenwachs mit $M_n$ = 3800 g/mol.

$F_3$: Glycerinmonostearat (Loxiol® G 16 von Henkel): partieller Fettsäureester des Glycerins, Viskosität 90 bis 130 mPas bei 80°C.

**Herstellung von thermoplastischen Formmassen**

Die Komponenten A bis F wurden auf einem Zweiwellenextruder (ZSK 30 von Werner & Pfleiderer) bei 250 bis 280°C gemischt, als Strang ausgetragen, gekühlt und granuliert.

Das getrocknete Granulat wurde bei 250 bis 280°C zu Rundschreiben, ISO-Prüfkörpern sowie Flachstäben für die UL-94-Prüfung verarbeitet. Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Zähigkeit der Formmassen wurde mittels der Kerbschlagzähigkeit (ISO 179 1 eA) charakterisiert. Des weiteren wurde die Durchstoßarbeit nach DIN 53 443 an Rundschreiben ermittelt. Neben dem ermittelten Wert wird auch die Neigung zur Delaminierung beim Durchstoßversuch qualitativ beurteilt. Die Fließfähigkeit der Formmassen wurde nach DIN 53 735 bei einer Temperatur von 260°C und 5 kg Belastung bestimmt.

Die Prüfung der Flammwidrigkeit erfolgte im vertikalen Brandtest nach den Vorschriften der Underwriter Laboratories (UL 94). Die Prüfung wurde an jeweils 5 Proben der Abmessungen 127 mm x 12,7 mm x 1,7 mm durchgeführt. Jeder Probekörper wurde je zweimal einer offenen Flamme ausgesetzt, bei allen Proben wurde die Nachbrenndauer bei jeder Beflammung gemessen. Als Gesamtbrandzeit ($t_{ges}$) wurde die Summe der Nachbrenndauer dieser insgesamt 10 Beflammungen bezeichnet.

Zur Charakterisierung der Flammschutzmittelemission wurden isotherme TGA-Messungen bei 250°C durchgeführt. Aus den erhaltenen Messkurven wurde der prozentuale Massenverlust nach 20 Minuten ermittelt. Zur Beurteilung der Farbstabilität bei Wärmebeanspruchung wurden Rundscheiben 14 Tage bei 80°C gelagert und anschließend visuell begutachtet. Die Zusammensetzung und Eigenschaften der thermoplastischen Formmassen sind Tabelle 1 zu entnehmen.

Tabelle 1

| Formmassen und Eigenschaften | | | | | | | | |
|---|---|---|---|---|---|---|---|---|
| Formmasse Nr. | V1 | V2 | V3 | V4 | 1 | 2 | 3 | 4 |
| Komponente Gew.% | | | | | | | | |
| A | 64,3 | 64,3 | 62,4 | 62,4 | 63,1 | 62,4 | 62,4 | 62,3 |
| $B_1$ | 4 | 4 | 3,9 | 3,9 | 3,9 | 3,9 | 7,8 | 7,8 |
| $B_2$ | 4 | 4 | 3,9 | 3,9 | 3,9 | 3,9 | - | - |
| $C_1$ | 16 | 16 | 15,4 | 15,4 | 15,6 | 15,4 | 15,4 | - |
| $C_2$ | - | - | - | - | - | - | - | 11,9 |
| $D_1$ | - | 11 | 11 | 11 | 11 | 11 | 11 | 11 |
| $D_2$ | 11- | - | - | - | - | - | - | - |
| $E_1$ | 0,4 | 0,4 | 0,4 | 0,4 | 0,4 | 0,4 | 0,4 | - |
| $E_2$ | - | - | - | - | - | - | - | 4 |
| $F_1$ | 0,3 | 0,3 | - | - | 2,1 | 3 | 3 | 3 |
| $F_2$ | - | - | 3 | - | - | - | - | - |
| $F_3$ | - | - | - | 3 | - | - | - | - |
| Vicat B [°C] | 90 | 99 | 98 | 97 | 99 | 98 | 98 | 99 |
| MVI [ml/10'] | 39 | 22 | 34 | 34 | 30 | 35 | 36 | 34 |

Tabelle 1 (fortgesetzt)

| Formmassen und Eigenschaften | | | | | | | | |
|---|---|---|---|---|---|---|---|---|
| Formmasse Nr. | V1 | V2 | V3 | V4 | 1 | 2 | 3 | 4 |
| Komponente Gew.% | | | | | | | | |
| W [Nm] | 43 | 43 | 32 | 24 | 43 | 42 | 39 | 37 |
| Delaminierung | nein | nein | ja | ja | nein | nein | nein | nein |
| $a_K$ [kJ/m$^2$] | 22 | 24 | 23 | 19 | 26 | 24 | 23 | 22 |
| Masseverlust [%] | 2,4 | 0,2 | 0,4 | 0,7 | 0,3 | 0,4 | 0,3 | 0,3 |
| Verfärbung | nein | nein | nein | ja | nein | nein | nein | nein |
| UL 94 $t_{ges}$[s] | V-O 46 | V-O 39 | V-1 78 | V-1 87 | V-O 42 | V-O 45 | V-O 38 | V-O 41 |
| V: Vergleichsversuche | | | | | | | | |

V1, V2, V3 und V4 sind Vergleichsversuche. In V1 wird als Flammschutzmittel ein Triphenylphosphat, d.h. eine Verbindung mit nur einem Phosphoratom eingesetzt. Die Formmasse zeigt einen hohen Masseverlust. Die Schmelzeviskosität (gemessen als MVI) ist ausreichend, bedingt durch das verwendete Flammschutzmmittel. Vergleichsformmasse V2 enthält ein erfindungsgemäßes Flammschutzmittel, jedoch eine geringe Menge an Schmiermittel $F_1$. Im Unterschied zu Vergleichsformmasse V1 ist die Schmelzeviskosität sehr hoch (kleiner MVI-Wert). Der Masseverlust ist gering. Vergleichsformmasse V3 weist ein nicht erfindungsgemäßes Schmiermittel auf. Es tritt Delaminierung auf. Zudem ist die Flammwidrigkeit nur der Stufe V-1 entsprechend.

Vergleichsformmasse V4 weist ebenfalls ein nicht erfindungsgemäßes Schmiermittel auf. Es treten Delaminierung und Verfärbung auf. Zudem wird auch nur die Brandschutzklasse V-1 erreicht.

Die erfindungsgemäßen Formmassen weisen eine niedrige Schmelzeviskosität (hohe MVI-Werte), einen geringen Masseverlust, keine Verfärbung oder Delaminierung und hervorragende Flammwidrigkeit auf.

## Patentansprüche

**1.** Thermoplastische Formmasse, enthaltend, bezogen auf das Gesamtgewicht der Komponenten A bis F, das insgesamt 100 Gew.-% ergibt,

a: 1 bis 93,9 Gew.-% mindestens eines Polycarbonats als Komponente A,

b: 1 bis 93,9 Gew.-% mindestens eines teilchenförmigen Emulsionspolymerisats mit einer Glasübergangstemperatur unterhalb von 10°C als Komponente B,

c: 1 bis 93,9 Gew.-% mindestens eines Copolymerisats eines Styrols, substituierten Styrols, (Meth)acrylsäureesters oder Gemischen davon mit Acrylnitril, Methacrylnitril, Maleinsäureanhydrid, Maleinimiden oder Gemischen davon als Komponente C,

d: 3 bis 20 Gew.-% mindestens einer Phosphorverbindung mit mindestens 2 Phosphoratomen als Komponente D,

e: 0,1 bis 10 Gew.-% eines Antitropfmittels als Komponente E,

f: 1 bis 5 Gew.-% eines Mehrkomponentenesters auf der Basis von Pentaerythrit als Komponente F,

g: bis 50 Gew.-% weiterer Zusatzstoffe als Komponente G.

**2.** Formmasse nach Anspruch 1, dadurch gekennzeichnet, daß Komponente B ein Pfropfcopolymerisat ist aus

b1: 20 bis 95 Gew.-% einer Pfropfgrundlage aus einem kautschukelastischen Polymer mit einer Glasübergangstemperatur unterhalb Von 10°C als Komponente B1,

b2: 5 bis 80 Gew.-% einer Pfropfauflage als Komponente B2 aus

b21: 25 bis 95 Gew.-% Styrol, substituiertem Styrol, (Meth)acrylsäureestern oder Gemischen davon als Komponente B21,

b22: 5 bis 75 Gew.-% Acrylnitril, Methacrylnitril, Maleinsäureanhydrid, Maleinimid oder Gemischen davon als Komponente B22.

**3.** Formmasse nach Anspruch 1 oder 2, dadurch gekennzeichnet, daß Komponente C ein Copolymerisat ist aus

c1: 25 bis 95 Gew.-% eines Styrols, substituierten Styrols, (Meth)acrylsäureesters oder Gemischen davon als Komponente C1,

c2: 5 bis 75 Gew.-% Acrylnitril, Methacrylnitril, Maleinsäureanhydrid, Maleinimiden oder Gemischen davon als Komponente C2.

**4.** Formmasse nach einem der Ansprüche 1 bis 3, dadurch gekennzeichnet, daß Komponente D die allgemeine Formel (I) aufweist,

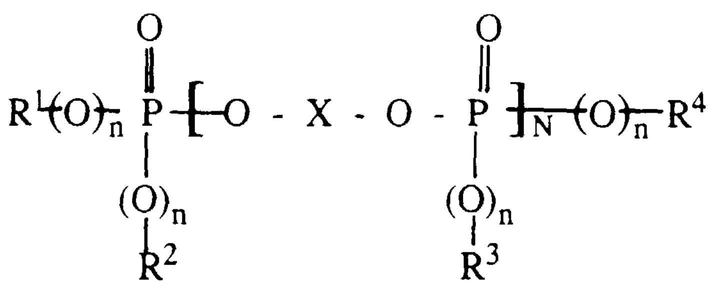

(I)

in der n unabhängig voneinander den Wert 0 oder 1 hat,

$R^1$, $R^2$, $R^3$ und $R^4$ unabhängig voneinander $C_{1-8}$-Alkyl, $C_{5-6}$-Cycloalkyl, $C_{6-10}$-Aryl oder $C_{7-12}$-Aralkyl oder, sofern n = 1, Wasserstoff bedeuten,

N einen mittleren Wert von 1 bis 5 hat und

X einen ein- oder mehrkernigen aromatischen $C_{6-30}$-Rest bedeutet.

**5.** Formmasse nach Anspruch 4, dadurch gekennzeichnet, daß X ein m- oder p-Phenylenrest ist, n den Wert 1 hat, die Reste $R^1$, $R^2$, $R^3$ und $R^4$ Phenylreste sind und N einen mittleren Wert von 1,1 bis 4,8 hat.

**6.** Formmasse nach einem der Ansprüche 1 bis 5, dadurch gekennzeichnet, daß der Mehrkomponentenester der Komponente F eine Viskosität von mehr als 70 mPas bei 80°C aufweist.

**7.** Verfahren zur Herstellung von Formmassen nach einem der Ansprüche 1 bis 6 durch Mischen der Komponenten A bis F und gegebenenfalls G.

**8.** Verwendung von Formmassen nach einem der Ansprüche 1 bis 6 zur Herstellung von Fasern, Folien oder Formkörpern.

**9.** Fasern, Folien oder Formkörper aus einer Formmasse nach einem der Ansprüche 1 bis 6.

**10.** Verfahren zur Herstellung von Fasern, Folien oder Formkörpern nach Anspruch 9 durch Extrudieren, Extrusionsblasen oder Spritzgießen.